# EUROPÄISCHE PATENTSCHRIFT

(11) **EP 1 359 650 B1**
(45) Veröffentlichungstag und Bekanntmachung des Hinweises auf die Patenterteilung: **04.09.2013**
(21) Anmeldenummer: 03007188.0
(22) Anmeldetag: 29.03.2003
(51) Int. Cl.: H02B 1/32

(54) **Anschlussvorrichtung für elektrische Verteiler**
Connection device for an electric distribution installation
Dispositif de raccordement pour installation de distribution électrique

(30) Priorität: 30.04.2002 DE 10219794
(43) Veröffentlichungstag der Anmeldung: 05.11.2003
(73) Patentinhaber: Hager Electro GmbH & Co. KG, 66440 Blieskastel (DE)
(72) Erfinder: Dissel, Klaus, 66131 Saarbrücken (DE); Zimmermann, Manfred, 66131 Saarbrücken (DE)
(74) Vertreter: Bernhardt, Winfrid

(56) Entgegenhaltungen:
- EP-A- 0 496 458
- WO-A1-99/36987
- DE-A1- 19 610 854
- DE-U- 1 993 996
- FR-A- 2 368 812

## Beschreibung

Die Erfindung betrifft eine Anschlussvorrichtung für elektrische Verteiler, insbesondere PE/N-Anschlussvorrichtung, mit einer Leiteranschlussleiste und einer ausschließlich die Leiteranschlussleiste haltenden Trägereinrichtung.

Bekanntermaßen werden solche Anschlussvorrichtungen z.B. in Verteilerkästen eingebaut, wo sie durch die Trägereinrichtung im Abstand vom Kastenboden gehalten werden. Anschlussarbeiten erfolgen im eingebauten Zustand.

Aus der WO99/36987A ist eine Anschlussvorrichtung zur Herstellung von Telefonverbindungen bekannt, welche in Kammern einsetzbare Anschlussleisten umfasst. Die Anschlussleisten sind mit Zapfen an ihren Enden in Öffnungen in einander gegenüberliegenden Kammerwänden einsetzbar, wobei in jeder Kammerwand zur Aufnahme weiterer Bauteile mehrere solche Öffnungen in vertikalem Abstand zueinander gebildet sind. Zum Anschluss von Leitungen lässt sich ein Sockelteil der Anschlussleiste um 180° gedreht in einer Position oberhalb seiner Betriebsposition in einem für ein anderes Bauteil vorgesehenen Haltesitz anordnen.

Die FR-A-236868812 beschreibt eine Anschlussvorrichtung, in welcher eine elektrische Geräte aufnehmende Trägerleiste in verschiedenen Höhen über einer Basisebene arretierbar ist, wobei seitliche Verbindungsstücke der Leiste in eine Zahnung an Trägerböcken, die an den Enden der Leiste angeordnet sind, eingreift.

Der vorliegenden Erfindung liegt die Aufgabe zugrunde, eine neue Anschlussvorrichtung der eingangs erwähnten Art zu schaffen, welche an Verteilerkästen durchzuführende Montagearbeiten, insbesondere Verdrahtungen, erleichtert.

Die diese Aufgabe lösende Anschlussvorrichtung für elektrische Verteiler nach der Erfindung ist dadurch gekennzeichnet, dass die Leiteranschlussleiste an der Trägereinrichtung in zwei verschiedenen Höhen in einer Basisebene arretierbar und in der gehobenen Arretierungsposition gegenüber der niedrigeren Arretierungsposition um eine sich in Leistenlängsrichtung erstreckende Drehachse geneigt ist, wobei die Leiteranschlussleiste zur Überführung in die gehobene Arretierungsposition an der Trägereinrichtung in Führungen verschiebbar ist.

Die Leiteranschlussleiste kann aus einer normalen Betriebsposition, z.B. über einem Verteilerkastenboden, in eine angehobene Montageposition überführt werden, in welcher sie leichter zugänglich und somit größere Montagefreiheit gegeben ist. Leiter können so mit geringem Aufwand bequem an der Leiste angeschlossen werden. Als in besonderem Maße vorteilhaft erweist sich diese Möglichkeit zur Anhebung für Leiteranschlussleisten, die aus einer Trägerleiste und an der Trägerleiste anbringbaren Anschlussmodulen aufgebaut sind. Die Montage der Leiteranschlussleiste unter Anbringung der Anschlussmodule an der Trägerleiste sowie leitender Verbindungsbrücken zwischen den Modulen lässt sich in der angehobenen Position wesentlich leichter als in der Betriebsposition bewältigen. Gemäß der Erfindung lässt sich die Leiteranschlussleiste in der gehobenen Montageposition in einer zur Basisebene geneigten Stellung anordnen. An der so verdrehten Anschlussleiste lassen sich Leiter bzw. Anschlussmodule besonders bequem anbringen.

In weiterer Ausgestaltung der Erfindung kann die Leiteranschlussleiste in der gehobenen Position infolge der Verdrehung arretiert sein, d.h. mit der Verdrehung um die genannte Längsachse erfolgt eine Verriegelung ggf. unter Einrastung derart, dass sie nicht mehr in die niedrigere Position absenkbar ist.

Zur Bewegung zwischen den Höhenpositionen kann die Leiteranschlussleiste an der Trägereinrichtung, bei der es sich vorzugsweise um an den Enden der Leiteranschlussleiste angreifende Trägerböcke handelt, in zu der Basisebene senkrechten Führungen verschiebbar sein.

Während zur Bildung der Führungen Hülsen und in den Hülsen geführte Zapfen denkbar sind, weisen in einer bevorzugten platzsparenden Lösung die Trägerböcke plattenförmige Abschnitte auf, in denen Führungsrillen gebildet sind, in die ein von den Enden der Leiteranschlussleiste vorstehendes Führungselement eingreift.

Vorteilhaft ist das Führungselement durch zwei im Abstand zueinander angeordnete Führungszapfen gebildet, wobei die Führungsrille eine Führungsrillenabzweigung aufweist, in welche einer der Führungszapfen einführbar ist, wenn die Leiste, wie oben erwährt, zur Arretierung verdreht wird. Die Führungsrillenabzweigung kann schräg zur Führungsrille derart verlaufen, dass eine Absenkung der Leiste ohne vorherige Drehung nicht möglich ist, weil sich der Führungszapfen in der Führungsrillenabzweigung verhakt.

In der Führungsrillenabzweigung kann eine Rastnase zum Einrasten des Führungszapfens gebildet sein, so dass die Leiteranschlussleiste auch noch an einer die Verriegelung aufhebenden Drehung gehindert ist, was zu einer weiteren Erleichterung von Montagearbeiten an der Leiste beiträgt.

In weiterer Ausgestaltung der Erfindung ist an der Trägereinrichtung eine die Ausgangsposition für die Verdrehung der Leiteranschlussleiste festlegende Anschlagnase für die Leiteranschlussleiste gebildet. In der Ausführungsform mit einer Führungsrillenabzweigung ist damit gesichert, dass bei Verdrehung der Leiste der betreffende Zapfen unbehindert in die Führungsrillenabzweigung einführbar ist.

Vorteilhaft können an den Enden der Leiteranschlussleiste die Trägerböcke hintergreifende Hakenelemente gebildet sein, die eine Aufspreizung der Trägerböcke verhindern und sichern, dass die Führungszapfen im Eingriff mit der Führungsrille verbleiben.

An dem Hakenelement kann eine gegen die genannte Anschlagnase an der Trägereinrichtung anlegbare weitere Nase gebildet sein, welche eine Translationsverschiebung zu einem offenen Ende der Führungsrille hin verhindert.

Zweckmäßig ist letztere Nase an einer elastisch bewegbaren, an dem Hakenelement gebildeten Zunge vorgesehen, wobei die Zunge nahe ihrem freien Ende mit einem Hebelarm verbunden ist, durch dessen Betätigung eine durch die Anschlagnase und die weitere Nase gebildete Anschlagsperre aufgehoben werden kann.

In weiterer vorteilhafter Ausgestaltung der Erfindung ist die Leiteranschlussleiste auf die Trägereinrichtung aufsteckbar, wobei die Führungszapfen durch das offene Ende in die Führungsrillen eintreten. Eine weitere Anschlagnase an der Trägereinrichtung kann verhindern, dass die Leiteranschlussleiste von der Trägereinrichtung versehentlich abgezogen wird.

Die Erfindung soll nun anhand eines Ausführungsbeispiels und der beiliegenden, sich auf dieses Ausführungsbeispiels beziehenden Zeichnungen näher erläutert werden.

Es zeigen:
Fig. 1 eine Anschlussvorrichtung nach der Erfindung in einer Seitenansicht,
Fig. 2 die Anschlussvorrichtung von Fig. 1 in einer Draufsicht,
Fig. 3 die Anschlussvorrichtung von Fig. 1 in einer zu der Ansicht von Fig. 1 um 90° gedrehten Seitenansicht,
Fig. 4 einen in der Vorrichtung von Fig. 1 verwendetes Klemmleistenträgerteil in perspektivischer Ansicht,
Fig. 5 bis 7 Details des Klemmleistenträgerteils von Fig. 4,
Fig. 8 und 9 Detaildarstellungen der Vorrichtung von Fig. 1 in verschiedenen perspektivischen Ansichten,
Fig. 10 und 11 ein in der Vorrichtung von Fig. 1 verwendetes Trägerbockteil in verschiedenen perspektivischen Ansichten, und
Fig. 12 eine in der Vorrichtung von Fig. 1 verwendbare, mit Anschlussmodulen bestückte Anschlussleiste.

Eine Anschlussleiste bzw. ein Trägerteil 1 einer PE/N-Anschlussleiste ist durch zwei, zueinander spiegelsymmetrische Trägerböcke 2 im Abstand zu einer Basisebene 4 gehalten. Die Basisebene 4 kann z.B. durch den Boden eines Verteilerkastens gebildet sein.

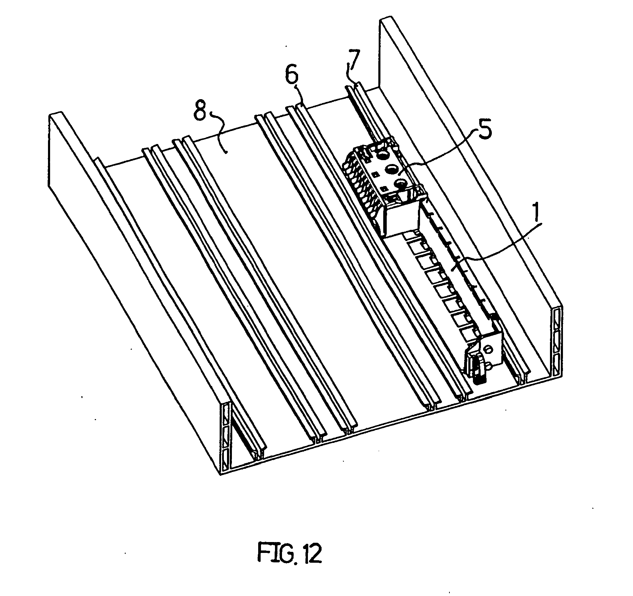

Auf dem mit Öffnungen 15 und 16 versehenen Trägerteil 1 sind zur Vervollständigung der PE/N-Anschlussleiste Klemmanschlussmodule anbringbar. Ein teilweise mit solchen Klemmanschlussmodulen 5 bestückter Trägerteil 1 geht aus Fig. 12 hervor. (Die dort gezeigte Anschlussleiste ist zwischen Rastschienen 6 und 7 eingeklemmt, die an der Innenwand eines Kabelkanals 8 gebildet sind).

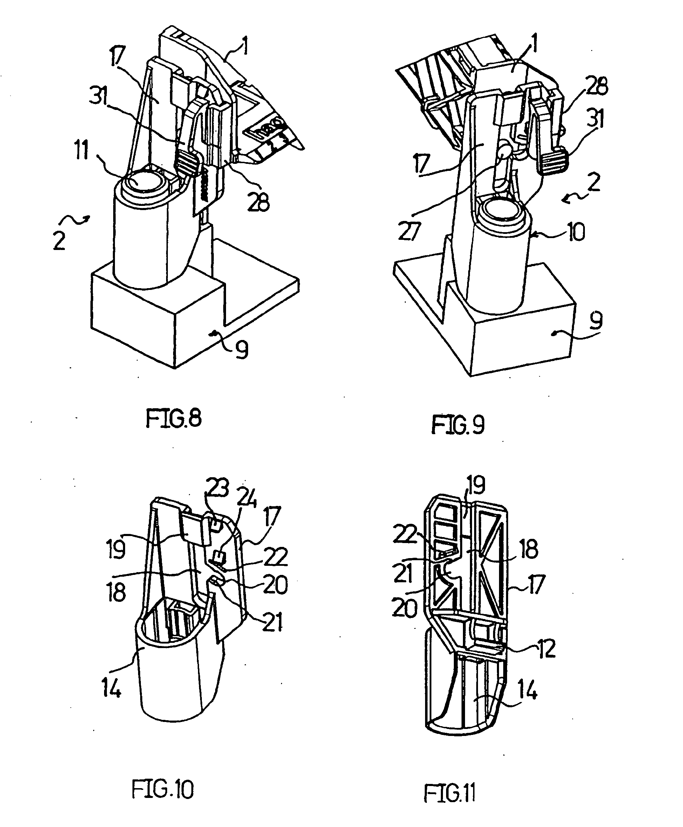

Wie sich insbesondere den Fig. 8 und 9 entnehmen lässt, sind die Trägerböcke 2 mehrteilig aus einem Basisteil 9 und einem Halteteil 10 gebildet. Der Basisteil 9 kann z.B. einstückig mit dem Boden eines Verteilerkastens verbunden sein. Der Halteteil 10 lässt sich mit einem Hülsenabschnitt 14 auf einen von dem Basisteil 9 vorstehenden Zapfen 11 aufstecken, wobei eine an dem Halteteil 10 gebildete Rastnase 12 an einer mit dem Basisteil 9 verbundenen Rastlasche 13 einrastet.

Der Hülsenabschnitt 14 des Halteteils 10 ist mit einer Halteplatte 17 verbunden, in welcher eine an einem Ende offene Führungsrille 18 gebildet ist. Am offenen Ende der Führungsrille 18 weist die Halteplatte 17 einen zu der Führungsrille 18 versetzt angeordneten Versteifungssteg 19 auf.

Von der Führungsrille 18 erstreckt sich eine Führungsrillenabzweigung 20 mit einander gegenüberliegenden Rastnasen 21. Parallel zur Abzweigung 20 ist eine Schlitzausnehmung 22 gebildet.

Die Halteplatte 17 weist ferner zwei Anschlagnasen 23 und 24 auf, die in zu der Führungsrille 18 paralleler Richtung im Abstand zueinander angeordnet sind.

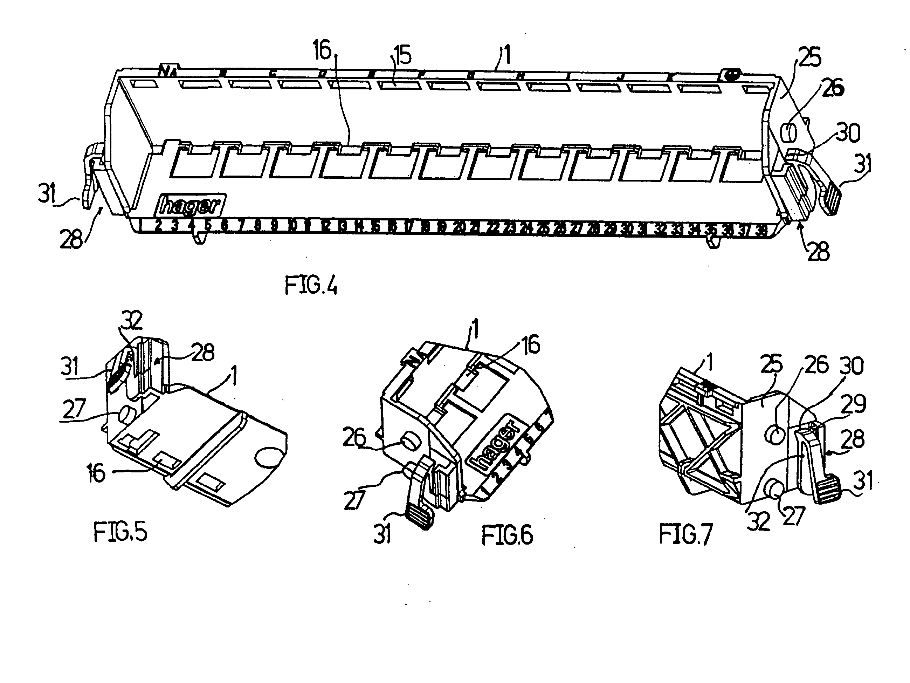

Wie insbesondere Fig. 7 erkennen lässt, stehen von Stirnwänden 25 des Trägerteils 1 jeweils zwei Führungszapfen 26 und 27 vor. Ferner ist an den Stirnwänden 25 ein Hakenelement 28 gebildet, welches die Halteplatte 17 des betreffenden Trägerbocks hintergreift und sich in seiner Länge parallel zur Verbindungslinie zwischen den Führungszapfen 26 und 27 erstreckt.

An einem die Halteplatte 17 hintergreifenden Teil des Hakenelements 28 ist durch eine Längseinschlitzung 29 eine elastisch bewegbare Zunge 32 mit einer Nase 30 gebildet, welche zum Anschlag gegen die Nase 23 oder 24 an der Halteplatte 17 vorgesehen ist. Mit der elastischen Zunge 32 an deren Ende verbunden ist ein Hebel 31.

Gegenüber seiner in den Figuren gezeigten Position ist der zur Bildung der PE/N-Anschlussleiste dienende Trägerteil 1 im normalen Betriebszustand eines elektrischen Verteilers näher an der Basisebene 4 angeordnet, wobei, in Richtung auf die Basisebene 4 gesehen, die jeweiligen Nasen 30 die betreffenden Anschlagnasen 24 an der Halteplatte 17 hintergreifen. Somit ist der Leistenträgerteil 1 in der normalen Betriebsposition an den Trägerböcken 2 und 3 arretiert.

Bei Montage- oder Anschlussarbeiten, bei denen z.B. Anschlussmodule 5 an der Anschlussleiste anzubringen oder Leiter an die Leiste anzuschließen sind, kann der Trägerteil 1 in einer angehobenen Position arretiert werden, in welcher er leichter zugänglich und größere Montagefreiheit gegeben ist.

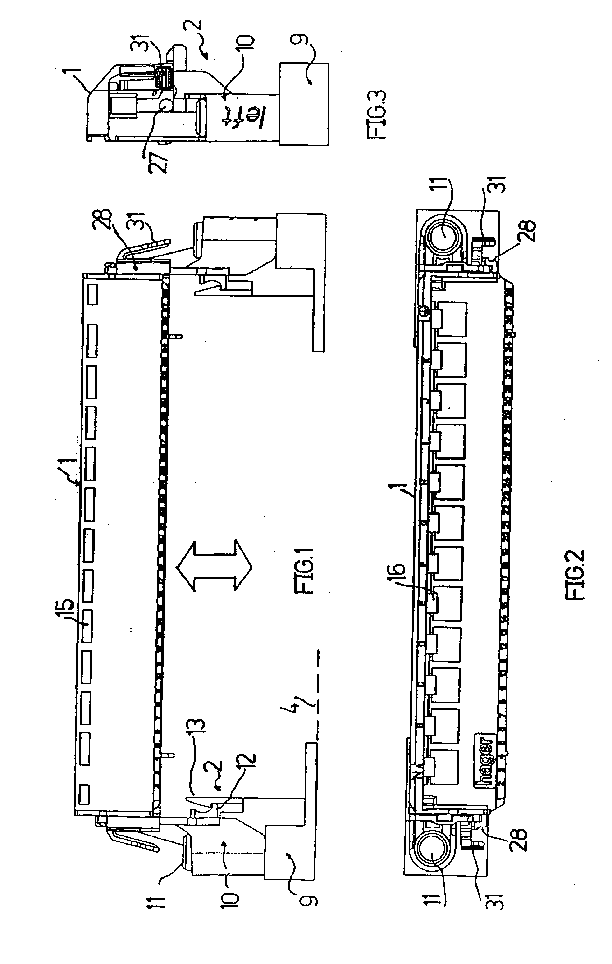

Hierzu werden die Hebel 31 in Richtung zur jeweiligen Stirnwand 25 verschwenkt und durch Verbiegung der Zungen 32 der durch die Nasen 24 und 30 gebildete Sperranschlag aufgehoben. Die Verschwenkung der Hebel kann gleichzeitig durch je einen Finger erfolgen, wobei die platzsparende Konstruktion genügend Eingriffsraum zwischen den Enden der Anschlussleiste und ggf. vorhandenen Seitenwänden eines Verteilerkastens bietet. Nach Überfahren der Nasen 24 durch die Nase 30 kann die Anschlussleiste nun entlang der Führungsrillen 18 in Richtung des in Fig. 1 gezeigten Pfeils ohne weitere Betätigung der Hebel 31 unter Parallelverschiebung bewegt werden, bis die gegen die Nasen 30 anstoßenden Anschlagnasen 23 eine Weiterbewegung verhindern.

In dieser durch die Nasen 23 festgelegten Anschlagposition lässt sich die Anschlussleiste um eine sich in ihrer Längsrichtung erstreckende Achse verdrehen, wobei der Führungszapfen 27 aus der Führungsrille 18 in die Führungsrillenabzweigung 20 gelangt und schließlich hinter den Nasen 21 in der Führungsrillenabzweigung 20 einrastet.

Die Schlitzausnehmung 22 sorgt für ausreichende, eine schnelle Abnutzung der Nasen 21 verhindernde Nachgiebigkeit der betreffenden Begrenzungswand der Führungsrillenabzweigung 20.

Die verdrehte Leiste ist nun arretiert. Durch den Eingriff der Führungszapfen 27 in die Führungsrillenabzweigungen 20, welche von der Senkrechten auf die Führungsrille 18 in Richtung zur Basisebene 4 abgewinkelt sind, kann die Anschlussleiste selbst mit großem Kraftaufwand nicht in die Normalposition nach unten gedrückt werden. In der verschwenkten Lage der Anschlussleiste lassen sich Module besonders bequem montieren bzw. elektrische Leiter bequem anschließen.

Um die Anschlussleiste in die Betriebsposition zurück zu bewegen, erfolgt zunächst eine Drehung um die genannte Längsachse in umgekehrter Richtung, wobei eine durch die Rastnasen 21 erzeugte Gegenkraft zu überwinden ist. In Bewegungsrichtung auf die Betriebsposition sind die Anschlagnasen 24 geneigt, so dass die Nasen 30 über die Nasen 24 hinweggleiten und ohne Betätigung der Hebel 31 in die anfänglich eingenommenen Rastpositionen hinter den Anschlagnasen 24 gelangen können.

Um die Anschlussleiste von den Trägerböcken 2 abzunehmen, werden die Hebel 31 unter Ausklinken der Nasen 30 dauerhaft gedrückt, so dass weder die Anschlagnasen 23 noch die Nase 24 ein Hindernis bilden können. Aufgrund an den Nasen 23 und 24 ausgebildeter Gleitschrägen lässt sich die Anschlussleiste umgekehrt ohne Betätigung der Hebel 31 auf die Trägerböcke 2 aufstecken, wobei die Führungszapfen 26,27 in die einseitig offene Führungsrille 18 eingeschoben werden.

Die die Halteplatten 17 hintergreifenden Hakenelemente 28 bilden eine zusätzliche Leistenführung. Insbesondere verhindern sie eine unerwünschte Aufspreizung der Trägerböcke 2 durch Verbiegen ihrer Halteplatten 17.

## Patentansprüche

1. Anschlussvorrichtung für elektrische Verteiler, insbesondere PE/N-Anschlussvorrichtung, mit einer Leiteranschlussleiste (1,5) und einer ausschließlich die Leiteranschlussleiste (1,5) haltenden Trägereinrichtung (2),
**dadurch gekennzeichnet,**
**dass** die Leiteranschlussleiste (1,5) an der Trägereinrichtung (2) in genau zwei verschiedenen Höhen über einer Basisebene (4) arretierbar und in der gehobenen Arretierungsposition gegenüber der niedrigeren Arretierungsposition um eine sich in Leistenlängsrichtung erstreckende Drehachse geneigt ist, wobei die Leiteranschlussleiste (1,5) zur Überführung in die gehobene Arretierungsposition an der Trägereinrichtung (2) in Führungen verschiebbar ist.

2. Anschlussvorrichtung nach Anspruch 1,
**dadurch gekennzeichnet,**
**dass** die Leiteranschlussleiste (1,5) in der gehobenen Arretierungsposition infolge der Verdrehung arretiert ist.

3. Anschlussvorrichtung nach Anspruch 1 bis 2,
**dadurch gekennzeichnet,**
**dass** die Trägereinrichtung an den Enden der Leiteranschlussleiste (1,5) angreifende Trägerböcke (2) umfasst.

4. Anschlussvorrichtung nach einem der Ansprüche 1 bis 3,
**dadurch gekennzeichnet,**
**dass** die Leiteranschlussleiste (1,5) an der Trägereinrichtung (2) in zu der Basisebene (4) senkrechten Führungen (26,27;18) verschiebbar ist.

5. Anschlussvorrichtung nach einem der Ansprüche 1 bis 4,
**dadurch gekennzeichnet,**
**dass** an der Trägereinrichtung (2), vorzugsweise in einem plattenförmigen Abschnitt (17), Führungsrillen (18) gebildet sind, in die ein von den Enden der Leiteranschlussleiste (1,5) vorstehendes Führungselement (26,27) eingreift.

6. Anschlussvorrichtung nach Anspruch 5,
**dadurch gekennzeichnet,**
**dass** das Führungselement durch zwei, im Abstand zueinander angeordnete Führungszapfen (26,27) gebildet ist.

7. Anschlussvorrichtung nach Anspruch 6,
**dadurch gekennzeichnet,**
**dass** die Führungsrille (18) eine Führungsrillenabzweigung (20) aufweist, in welche einer der Führungszapfen (27) unter Drehung der Leiteranschlussleiste (1,5) um die sich in Leistenlängsrichtung erstreckende Achse einführbar ist.

8. Anschlussvorrichtung nach Anspruch 7,
**dadurch gekennzeichnet,**
**dass** in der Führungsrillenabzweigung (20) eine Rastnase (21) zum Einrasten des Führungszapfens (27) in der Führungsrillenabzweigung (20) gebildet ist.

9. Anschlussvorrichtung nach einem der Ansprüche 1 bis 8,
**dadurch gekennzeichnet,**
**dass** an der Trägereinrichtung (2) ein die Ausgangsposition für die Verdrehung der Leiteranschlussleiste (1,5) festlegender Anschlag (23) für die Leiteranschlussleiste (1,5) gebildet ist.

10. Anschlussvorrichtung nach einem der Ansprüche 3 bis 9,
**dadurch gekennzeichnet,**
**dass** an den Enden der Leiteranschlussleiste (1,5) jeweils ein den betreffenden Trägerbock (2) hintergreifendes Hakenelement (28) gebildet ist, wobei das Hakenelement (28) vorzugsweise den die Führungsrille (18) aufweisenden plattenförmigen Abschnitt (17) des Trägerbocks (2) hintergreift.

11. Anschlussvorrichtung nach Anspruch 10,
**dadurch gekennzeichnet,**
**dass** an dem Hakenelement (28) eine gegen den Anschlag (23) an der Trägereinrichtung (2) anlegbare Nase (30) gebildet ist.

12. Anschlussvorrichtung nach Anspruch 11,
**dadurch gekennzeichnet,**
**dass** die Nase (30) an einer elastisch bewegbaren, an einem den Trägerbock hintergreifenden Teil des Hakenelements (28) gebildeten Zunge (32) vorgesehen
ist.

13. Anschlussvorrichtung nach Anspruch 12,
**dadurch gekennzeichnet,**
**dass** die Zunge (32) nahe ihrem freien Ende mit einem Hebelarm (31) verbunden ist.

## Claims

1. Connection apparatus for electrical distribution boards, in particular PE/N connection apparatus, having a conductor connection strip (1, 5) and a carrier device (2) which holds only the conductor connection strip (1, 5), **characterized in that** the conductor connection strip (1, 5) can be locked to the carrier device (2) at exactly two different heights above a base plane (4) and, in the raised locking position, is inclined about a rotation axis, which extends in the longitudinal direction of the strip, in relation to the lower locking position, wherein the conductor connection strip (1, 5) can be displaced on the carrier device (2) in guides in order to move to the raised locking position.

2. Connection apparatus according to Claim 1, **characterized in that** the conductor connection strip (1, 5) is locked in the raised locking position as a result of the rotation.

3. Connection apparatus according to Claims 1 to 2, **characterized in that** the carrier device comprises carrier blocks (2) which engage on the ends of the conductor connection strip (1, 5).

4. Connection apparatus according to one of Claims 1 to 3, **characterized in that** the conductor connection strip (1, 5) can be displaced on the carrier device (2)
in guides (26, 27; 18) which are perpendicular to the base plane (4).

5. Connection apparatus according to one of Claims 1 to 4, **characterized in that** guide grooves (18) are formed on the carrier device (2), preferably in a plate-like section (17), a guide element (26, 27) which projects from the ends of the conductor connection strip (1, 5) engaging in the said guide grooves.

6. Connection apparatus according to Claim 5, **characterized in that** the guide element is formed by two guide pins (26, 27) which are arranged at a distance from one another.

7. Connection apparatus according to Claim 6, **characterized in that** the guide groove (18) has a guide groove branch (20) into which one of the guide pins (27) can be inserted with rotation of the conductor connection strip (1, 5) about the axis which extends in the longitudinal direction of the strip.

8. Connection apparatus according to Claim 7, **characterized in that** a latching lug (21) for latching the guide pin (27) in the guide groove branch (20) is formed in the guide groove branch (20).

9. Connection apparatus according to one of Claims 1 to 8, **characterized in that** a stop (23), which defines the starting position for the rotation of the conductor connection strip (1, 5), for the conductor connection strip (1, 5) is formed on the carrier device (2).

10. Connection apparatus according to one of Claims 3 to 9, **characterized in that** in each case one hook element (28) which engages behind the respective carrier block (2) is formed at the ends of the conductor connection strip (1, 5), wherein the hook element (28) preferably engages behind the plate-like section (17), which has the guide groove (18), of the carrier block (2).

11. Connection apparatus according to Claim 10, **characterized in that** a lug (30) which can be placed against the stop (23) on the carrier device (2) is formed on the hook element (28).

12. Connection apparatus according to Claim 11, **characterized in that** the lug (30) is provided on an elastically movable tongue (32) which is formed on a portion of the hook element (28) which engages behind the carrier block.

13. Connection apparatus according to Claim 12, **characterized in that** the tongue (32) is connected to a lever arm (31) close to its free end.

## Revendications

1. Dispositif de raccordement pour appareil de distribution électrique, en particulier dispositif de raccordement PE/N, comprenant une barrette de raccordement de lignes (1, 5) et un dispositif porteur (2) qui maintient exclusivement la barrette de raccordement de lignes (1, 5), **caractérisé en ce que**
la barrette de raccordement de lignes (1, 5) est susceptible d'être bloquée sur le dispositif porteur (2) dans exactement deux hauteurs différentes au-dessus d'un plan de base (4) et, dans la position de blocage supérieure, elle est inclinée par rapport à la position de blocage inférieure autour d'un axe de rotation s'étendant dans la direction longitudinale de la barrette, et la barrette de raccordement de lignes (1, 5) est déplaçable dans des guidages sur le dispositif porteur (2) pour la transférer dans la position de blocage supérieure.

2. Dispositif de raccordement selon la revendication 1,
**caractérisé en ce que** la barrette de raccordement de lignes (1, 5) est bloquée dans la position de blocage supérieure à la suite de la rotation.

3. Dispositif de raccordement selon la revendication 1 et 2,
**caractérisé en ce que** le dispositif porteur comprend des blocs porteurs (2) qui saisissent les extrémités de la barrette de raccordement de lignes (1,5).

4. Dispositif de raccordement selon l'une des revendications 1 à 3, **caractérisé en ce que** la barrette de raccordement de lignes (1, 5) est déplaçable sur le dispositif porteur (2) dans des guidages (26, 27 ; 18) perpendiculaires au plan de base (4).

5. Dispositif de raccordement selon l'une des revendications 1 à 4, **caractérisé en ce que** des rainures de guidage (18) sont ménagées sur le dispositif porteur (2), de préférence dans un tronçon (17) en forme de plaque, rainures dans lesquelles s'engage un élément de guidage (26,27) qui dépasse depuis les extrémités de la barrette de raccordement de lignes (1, 5).

6. Dispositif de raccordement selon la revendication 5,
**caractérisé en ce que** l'élément de guidage est formé par deux tenons de guidage (26, 27) agencés à distance l'un de l'autre.

7. Dispositif de raccordement selon la revendication 6,
**caractérisé en ce que** la rainure de guidage (18) comporte une ramification de rainure (20), dans laquelle peut être introduit l'un des tenons de guidage (27) par rotation de la barrette de raccordement de lignes (1, 5) autour de l'axe s'étendant en direction longitudinale de la barrette.

8. Dispositif de raccordement selon la revendication 7,
**caractérisé en ce qu'**un ergot d'enclenchement (21) pour enclencher le tenon de guidage (27) dans la ramification de rainure (20) est formé dans la ramification de rainure (20).

9. Dispositif de raccordement selon l'une des revendications 1 à 8, **caractérisé en ce qu'**une butée (23) pour la barrette de raccordement de lignes (1, 5) est formée sur le dispositif porteur (2) pour fixer la position de départ pour la rotation de la barrette de raccordement de lignes (1, 5).

10. Dispositif de raccordement selon l'une des revendications 3 à 9, **caractérisé en ce qu'**un élément en crochet (28) respectif qui engage le bloc porteur concerné (2) par l'arrière est formé aux extrémités de la barrette de raccordement de lignes (1, 5), ledit élément en crochet (28) engageant par l'arrière de préférence le tronçon (17) du bloc porteur (2) en forme de plaque comportant la rainure de guidage (18).

11. Dispositif de raccordement selon la revendication 10,
**caractérisé en ce qu'**un ergot (30) capable de venir en contact contre la butée (23) sur le dispositif porteur (2) est réalisée sur l'élément en crochet (28).

12. Dispositif de raccordement selon la revendication 11,
**caractérisé en ce que** l'ergot (30) est prévu sur une languette (32) élastiquement mobile, formée sur une partie de l'élément en crochet (28) qui engage le bloc porteur par l'arrière.

13. Dispositif de raccordement selon la revendication 12,
**caractérisé en ce que** la languette (32) est reliée à un bras de levier (31) à proximité de son extrémité libre.
